# EUROPEAN PATENT SPECIFICATION

(11) **EP 3 441 370 B1**
(45) Date of publication and mention of the grant of the patent: **14.04.2021**
(21) Application number: 16900080.9
(22) Date of filing: 24.08.2016
(51) Int. Cl.: C03B 5/03, C03B 5/235, C03B 5/193, C03B 5/16

(54) **GLASS TANK FURNACE HAVING HIGH MELTING RATE**
GLASWANNENOFEN MIT HOHER SCHMELZRATE
FOUR À BASSIN POUR VERRE À HAUTE VITESSE DE FUSION

(30) Priority: 27.04.2016 CN 201610272378
(43) Date of publication of application: 13.02.2019
(73) Proprietor: Jushi Group Co., Ltd., Tongxiang, Zhejiang 314500 (CN)
(72) Inventor: ZHANG, Yuqiang, Tongxiang Zhejiang 314500 (CN); CAO, Guorong, Tongxiang Zhejiang 314500 (CN); FANG, Changying, Tongxiang Zhejiang 314500 (CN); YU, Lifeng, Tongxiang Zhejiang 314500 (CN); SHEN, Peijun, Tongxiang Zhejiang 314500 (CN); ZHAO, Xianliang, Tongxiang Zhejiang 314500 (CN); YAN, Yucang, Tongxiang Zhejiang 314500 (CN); WENG, Xiaodong, Tongxiang Zhejiang 314500 (CN)
(74) Representative: Manitz Finsterwald Patent- und Rechtsanwaltspartnerschaft mbB
(86) International application number: PCT/CN2016/096473
(87) International publication number: WO 2017/185571

(56) References cited:
- CN-A- 102 503 138
- CN-A- 105 776 819
- CN-U- 201 737 825
- CN-Y- 2 257 822
- CN-Y- 2 565 819
- CN-Y- 2 565 819
- DE-C1- 19 710 351
- GB-A- 1 514 317
- JP-A- 2000 128 548
- US-A1- 2010 064 732
- US-A1- 2010 175 427

## Description

The present application claims priority to Chinese Patent Application No. 201610272378.6 filed to State Intellectual Property Office on April 27, 2016 and entitled "GLASS TANK FURNACE HAVING A HIGH MELTING RATE".

### Technical Field of the present invention

The present invention relates to the technical field of glass tank furnaces, and in particular to a glass tank furnace having a high melting rate. The features of the preamble of the independent claim are known from DE 19710351 C1. Related technologies are known from US 2010/175427 A1, GB 1 514 317 A, US 2010/064732 A1 and CN 2 565 819 Y.

### Background of the present invention

At present, because of the shortage of energy sources, the energy-intensive thermal equipment such as glass tank furnaces are becoming costly. The length-to-width ratio of a unit furnace in China in the present stage is generally controlled to be 3 to 3.3, and the melting rate (the melting rate refers to the amount of glass melted by per square meter melting area of the unit furnace per day, the glass flow is an actual discharge amount of the furnace (in tons), and the melting rate (ton/day*m²) is an index for reflecting the technical level of the unit furnace) is generally below 2.4 ton/day*m². Due to the backwardness of the equipment and the combustion process as well as too large area of the furnace and high temperature on the bottom, there are various disadvantages such as low melting rate, high investment, high energy consumption, low operating efficiency and low yield.

Therefore, in view of the above problems, it is necessary to provide a glass tank furnace having a high melting rate in order to overcome the disadvantages such as low melting rate and high energy consumption of the tank furnace.

### Summary of the present invention

In order to solve the above technical problem, the present invention provides a glass tank furnace having a high melting rate, as defined in the independent claim. Any embodiment in the description that does not fall within the scope defined by the claims should be regarded as an example for further understanding the present invention.

In the glass tank furnace having a high melting rate in the present invention, a length to width ratio of the glass tank furnace having a high melting rate is 2.3 to 2.8.

The glass tank furnace having a high melting rate has the feature:
a range of a depth of the tank furnace is 1 m to 1.2 m.

The glass tank furnace having a high melting rate has the feature:
pure oxygen burners are provided in the glass tank furnace having a high melting rate, and electrodes are provided on the bottom of the glass tank furnace having a high melting rate.

The glass tank furnace having a high melting rate has the feature:
the pure oxygen burners are mounted in one or more of the following ways: mounted on a crown, horizontally mounted on breast walls, and obliquely mounted on the breast walls.

The glass tank furnace having a high melting rate has the feature:
a number of the pure oxygen burners is 5 to 16.

The glass tank furnace having a high melting rate has the feature:
multiple rows of pure oxygen burners are provided in the glass tank furnace having a high melting rate, and a number of the pure oxygen burners in a middle row is less than a number of the pure oxygen burners in a boundary row.

The glass tank furnace having a high melting rate has the feature:
the pure oxygen burners are arranged in multiple rows, and the pure oxygen burners in adjacent rows are arranged alternately.

The glass tank furnace having a high melting rate has the feature:
the electrodes are arranged on the bottom in 4 to 8 rows, and there are 4 to 6 electrodes in each row.

The glass tank furnace having a high melting rate has the feature:
a weir and bubbles are provided on the bottom of the glass tank furnace having a high melting rate, a number of the weirs is one or more, and the bubbles are disposed before, behind or on the weir.

In the present invention, by reducing the area of a furnace and optimizing the length-to-width ratio thereof, the heat loss of the tank furnace is reduced. By designing an appropriate liquid glass tank depth, the temperature of a furnace bottom is improved and the quality of the liquid glass is guaranteed. By providing pure oxygen burners and auxiliary electric melting, sufficient energy is guaranteed, the melting capability and the heating efficiency of the tank furnace are improved, and energy consumption and the discharge amount of carbon dioxide are significantly reduced. Weirs arranged on the furnace bottom improve the outlet temperature of the liquid glass, reduce energy consumption, lower the temperature of the furnace bottom in the electrode area, prolong the service life of the furnace bottom, and guarantee an increased proportion of auxiliary power. By means of the design of bubbles at the furnace bottom, the backflow strength of the liquid glass, the melting capability, and the quality of the liquid glass are improved. In conclusion, the present invention can effectively improve the melting rate of tank furnaces and reduce the energy consumption.

### Brief Description of the Drawings

The accompanying drawings incorporated into the description and constituting a part of the description show the embodiments of the present invention, and are used for explaining the principle of the present invention in combination with the description. In these accompanying drawings, similar reference numerals represent similar elements. The accompanying drawings described hereinafter are some of but not all of the embodiments of the present invention. A person of ordinary skill in the art can obtain other drawings according to these drawings without paying any creative effort.
Fig. 1 is a planar structure diagram of a glass tank furnace having a high melting rate in a first specific embodiment;
Fig. 2 is a sectional structure diagram of the glass tank furnace having a high melting rate in the first specific embodiment;
Fig. 3 is a planar structure diagram of a glass tank furnace having a high melting rate in a second specific embodiment;
Fig. 4 is a sectional structure diagram of a glass tank furnace having a high melting rate in a third specific embodiment;
Fig. 5 is a sectional structure diagram of a glass tank furnace having a high melting rate in a fourth specific embodiment;
Fig. 6 is a planar structure diagram of a glass tank furnace having a high melting rate in a fifth specific embodiment;
Fig. 7 is a sectional structure diagram of the glass tank furnace having a high melting rate in the fifth specific embodiment; and
Fig. 8 is a sectional structure diagram of a glass tank furnace having a high melting rate in a sixth specific embodiment.

### Detailed Description of the present invention

To make the objectives, technical solutions and advantages of the embodiments of the present invention clearer, the technical solutions in the embodiments of the present invention will be described below clearly and completely in conjunction with the accompanying drawings in the embodiments of the present invention. Apparently, the described embodiments are some of but not all of the embodiments of the present invention. All other embodiments obtained by a person of ordinary skill in the art without paying any creative effort on the basis of the embodiments in the present invention shall fall into the protection scope of the present invention. It is to be noted that, the embodiments in the present application and the features in the embodiments can be combined at will if not conflict.

In the present invention, the length-to-width ratio of the glass tank furnace having a high melting rate is 2.3 to 2.8. In the prior art, for majority of tank furnaces, the length-to-width ratio is about 3, and the energy consumption of the furnace is substantially above 1000 kCal/kg. Experimental data has shown that, when the length-to-width ratio of the tank furnace in the present invention is 2.3 to 2.8, the energy consumption of the tank furnace having a high melting rate is below 1000 kCal/kg or even below 900K kCal/kg. Given a constant melting area, when the length-to-width ratio of the tank furnace is 2.3 to 2.8, it is advantageous for the optimum arrangement of electric boosting electrodes. By keeping the current in a preferred range while ensuring the desired power, the effective power will be higher, that is, the ratio of the actual power to the installed power will be higher.

The tank furnace has a depth of 1 m to 1.2 m. In the prior art, for majority of tank furnaces, the depth is above 1.2 m, and the energy consumption of the furnace is above 1100 kCal/kg. However, when the depth of the tank furnace in the prior art is below 1 m, due to the too small depth, the temperature of the bottom is high, and the utilization of electric boosting is low; moreover, the electric boosting accounts for less than 17% of the total energy consumption when the depth is below 1 m. In the present invention, for the tank furnace having a depth of 1 m to 1.2 m, the electric boosting accounts for more than 20% of the total energy consumption.

Pure oxygen burners are provided in the glass tank furnace having a high melting rate, and electrodes are provided on the bottom of the glass tank furnace having a high melting rate. The pure oxygen burners are mounted in one or more of the following ways: mounted on a crown, horizontally mounted on breast walls, and obliquely mounted on breast walls. There are 5 to 16 pure oxygen burners. Multiple rows of pure oxygen burners are provided in the tank furnace, and the number of pure oxygen burners in a middle row is less than the number of pure oxygen burners in a boundary row. The pure oxygen burners are arranged in multiple rows, and the pure oxygen burners in adjacent rows are arranged alternately. The electrodes are arranged on the bottom in 4 to 8 rows, and there are 4 to 6 electrodes in each row.

A weir and bubbles are provided on the bottom of the glass tank furnace having a high melting rate. There will be one or more weirs, and the bubbles are disposed before, behind or on the weirs.

In the present invention, by reducing the area of a furnace and optimizing the length-to-width ratio thereof, the heat loss of the tank furnace is reduced. By designing an appropriate liquid glass tank depth, the temperature of a furnace bottom is improved and the quality of the liquid glass is guaranteed. By providing pure oxygen burners and auxiliary electric melting, sufficient energy is guaranteed, the melting capability and the heating efficiency of the tank furnace are improved, and energy consumption and the discharge amount of carbon dioxide are significantly reduced. Weirs arranged on the furnace bottom improve the outlet temperature of the liquid glass, reduce energy consumption, lower the temperature of the furnace bottom in the electrode area, prolong the service life of the furnace bottom, and guarantee an increased proportion of auxiliary power. By means of the design of bubbles at the furnace bottom, the backflow strength of the liquid glass, the melting capability, and the quality of the liquid glass are improved. In conclusion, the present invention can effectively improve the melting rate of tank furnaces and reduce the energy consumption.

The present invention will be described below by specific embodiments.

### First specific embodiment

In this specific embodiment, horizontal pure oxygen burners are provided.

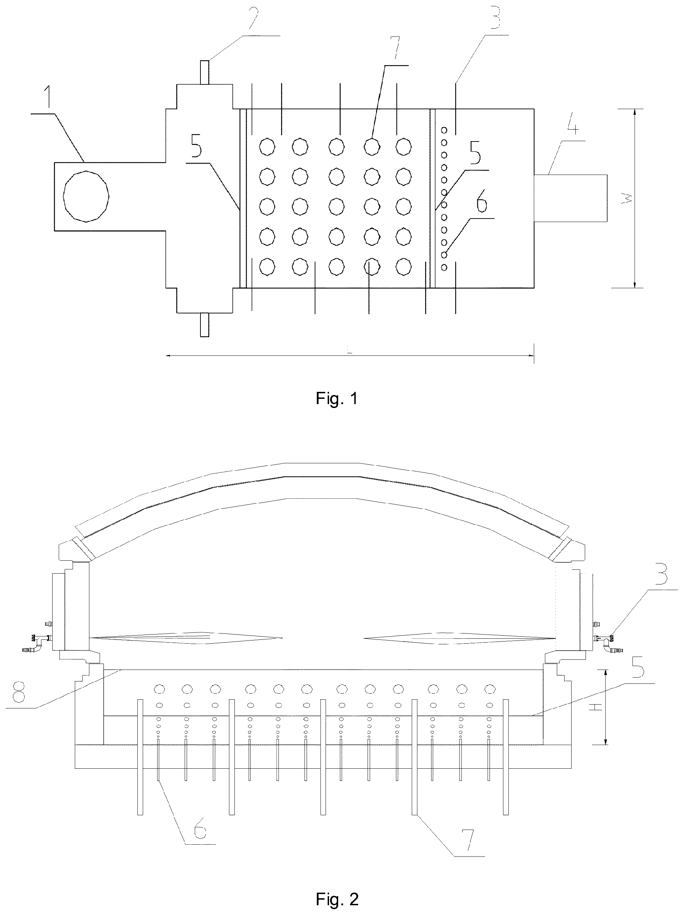

Referring to Figs. 1 and 2, the tank furnace having a high melting rate includes a flue 1, a batch feeder 2, a melting zone and a primary passageway. The flue is arranged on a rear wall of the tank furnace. In the drawings, L represents the length of the tank furnace, and W represents the width of the tank furnace. The length-to-width ratio (i.e., L/W) of the tank furnace having a high melting rate is 2.32, and the melting rate is 2.97 ton/day*m². Auriculatebaths for a feed port are arranged on two sides of the furnace. In this specific embodiment, the tank furnace includes horizontal pure oxygen burners 3, a throat 4, bottom weirs 5, bubbles 6 and electrodes 7. There are five pairs of pure oxygen burners 3 which are horizontally arranged on the breast walls at two sides. Five rows of electrodes 7 are provided on the bottom of the tank furnace, and there are five electrodes in each row. Weirs 5 are provided before and behind the electrodes 7, and the bubbles 6 are arranged behind the weirs 5. In the drawings, the reference numeral 8 represents a level line of the liquid glass, and H represents the depth of the liquid glass in the tank furnace. In this specific embodiment, the depth of the molten glass in the tank furnace is controlled at 1.2 m.

### Second specific embodiment

In this specific embodiment, oblique pure oxygen burners are provided.

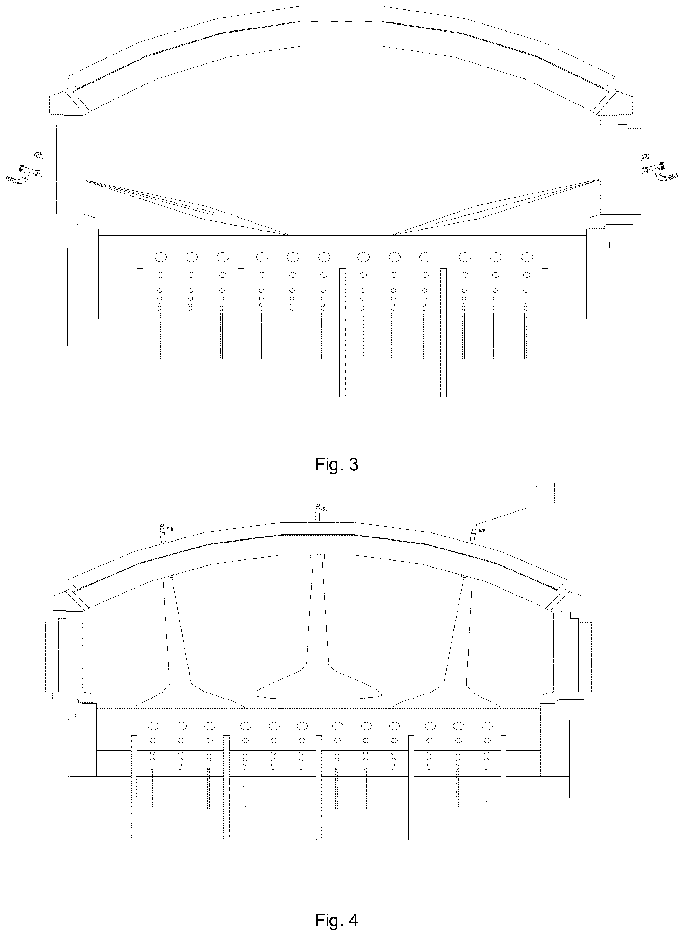

As shown in Fig. 3, in this specific embodiment, the length-to-width ratio (i.e., L/W) of the tank furnace having a high melting rate is 2.36, and the melting rate is 2.76 ton/day*m².The remaining structure settings are the same as those in the first specific embodiment. A difference between this specific embodiment and the first specific embodiment lies in that the pure oxygen burners are all obliquely arranged on the breast walls at two sides.

### Third specific embodiment

In this specific embodiment, pure oxygen burners are provided on a crown, called crown-mounted pure oxygen burners 11.

As shown in Fig. 4, a difference in structure between the tank furnace having a high melting rate in this specific embodiment and the tank furnace having a high melting rate in the first specific embodiment lies in that: the tank furnace includes pure oxygen burners arranged on a crown, rather than pure oxygen burners arranged on the breast walls. Specifically, three crown-mounted pure oxygen burners 11 are arranged on a crown of the furnace; four rows of electrodes 7 are arranged on the bottom of the furnace, and there are four electrodes in the first row and six electrodes in each row of the second row to the fourth row; and, weirs 5 are provided before and behind the electrodes 7, and bubbles 6 are arranged on the weirs.

### Fourth specific embodiment

In this specific embodiment, both horizontal pure oxygen burners and oblique pure oxygen burners are provided.

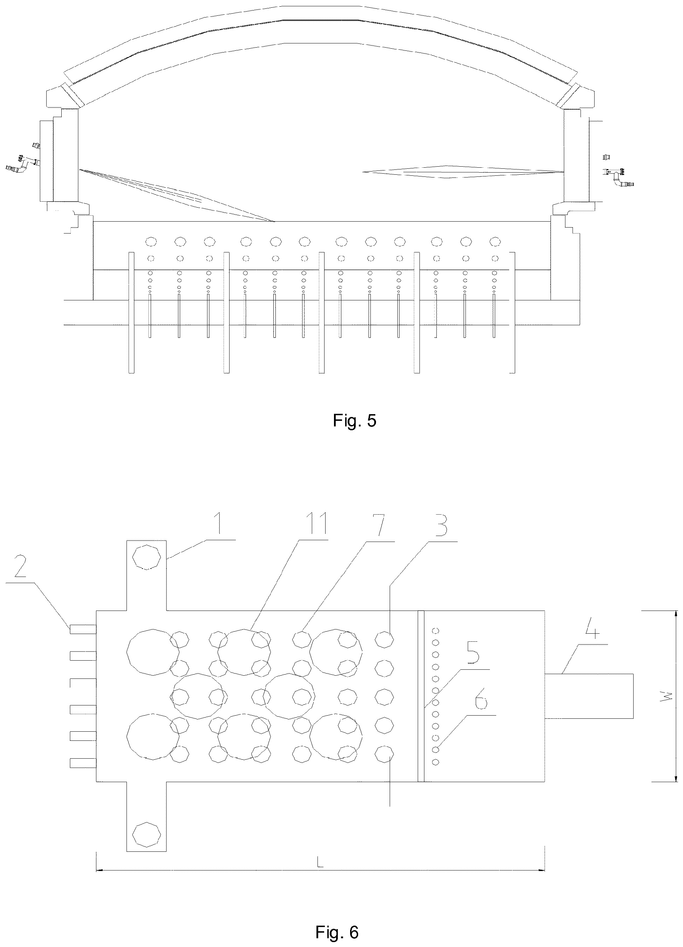

As shown in Fig. 5, in this specific embodiment, the length-to-width ratio (i.e., L/W) of the tank furnace having a high melting rate is 2.67, and the melting rate is 2.8 ton/day*m². The remaining structure settings are the same as those in the first specific embodiment. A difference between this specific embodiment and the first specific embodiment lies in that: some pure oxygen burners are horizontally arranged on the breast wall at one side, while the other pure oxygen burners are obliquely arranged on the breast wall at the other side. The number of the horizontally arranged pure oxygen burners is the same as the number of the obliquely arranged pure oxygen burners.

### Fifth specific embodiment

In this specific embodiment, both horizontal pure oxygen burners and crown-mounted pure oxygen burners are provided.

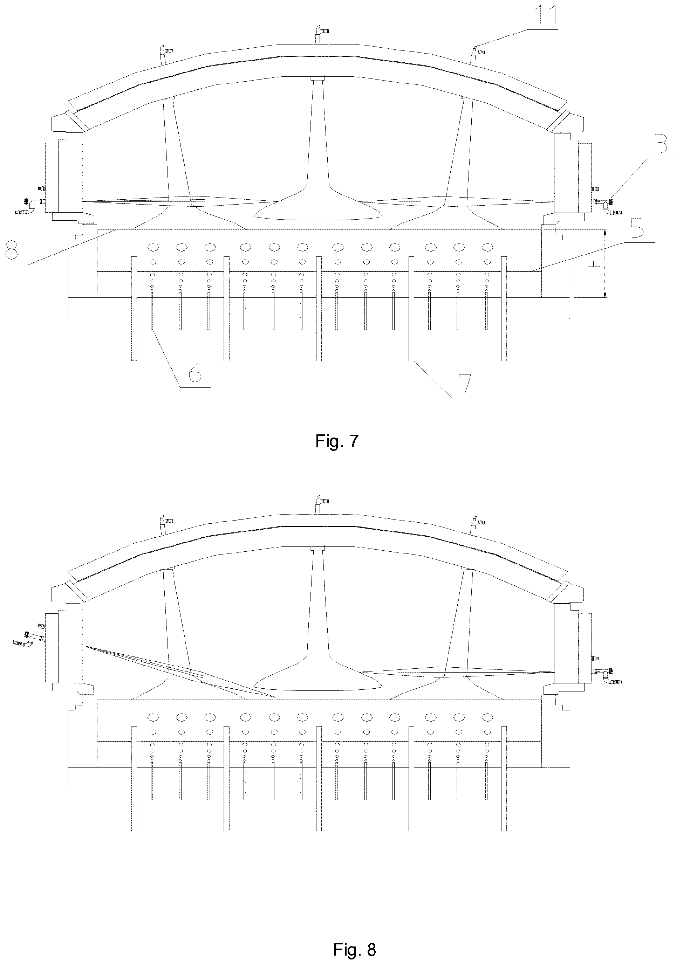

Referring to Figs. 6 and 7, in this embodiment, the tank furnace includes pure oxygen burners 3, a throat 4, bottom weirs 5, bubbles 6, electrodes 7 and crown-mounted pure oxygen burners 11. There are eight crown-mounted pure oxygen burners 11 which are arranged on a crown of the furnace. Two pure oxygen burners 3 are horizontally arranged on the breast walls at two sides. Six rows of electrodes are provided on the bottom, and there are five electrodes in each row. The weirs 5 are arranged before and behind the electrodes 7, and the bubbles 6 are arranged behind the weirs 5. In this specific embodiment, the length-to-width ratio (i.e., L/W) of the tank furnace having a high melting rate is 2.34, and the melting rate is 3.2 ton/day*m².

### Sixth specific embodiment

In this specific embodiment, horizontal pure oxygen burners, oblique pure oxygen burners and crown-mounted pure oxygen burners are provided.

As shown in Fig. 8, in this specific embodiment, the tank furnace includes pure oxygen burners horizontally arranged on the breast wall at one side, pure oxygen burners obliquely arranged on the breast wall at the other side, and pure oxygen burners arranged on a crown. The tank furnace further includes a throat, bottom weirs, bubbles and electrodes. In this specific embodiment, the length-to-width ratio (i.e., L/W) of the tank furnace having a high melting rate is 2.7, and the melting rate is 3 ton/day*m².

The contents described above can be implemented independently or jointly in various ways, and these variants shall all fall into the protection scope of the present invention.

It is to be noted that, as used herein, the term "comprise/comprising", "contain/containing" or any other variants thereof is non-exclusive, so that an object or device containing a series of elements not only contains these elements, but also contains other elements not listed explicitly, or further contains inherent elements of this object or device. Without more restrictions, an element defined by the term "comprising ..." does not exclude other identical elements in the object or device including this element.

The foregoing embodiments are merely used for describing the technical solutions of the present invention and not intended to constitute any limitations thereto. The present invention has been described in detail with reference to the preferred embodiments. It should be understood by a person of ordinary skill in the art that modifications or equivalent replacements can be made to the technical solutions of the present invention without departing from the scope of the technical solutions of the present invention defined by the claims of the present invention.

### INDUSTRIAL APPLICABILITY

In the present invention, by reducing the area of a furnace and optimizing the length-to-width ratio thereof, the heat loss is reduced; moreover, the melting rate of the tank furnace can be effectively improved, and the energy consumption can be reduced.

## Claims

1. A glass tank furnace having a high melting rate, a length (L) to width (W) ratio of the glass tank furnace having a high melting rate is 2.3 to 2.8,
wherein pure oxygen burners (3) are provided in the glass tank furnace having a high melting rate, and electrodes (7) are provided on the bottom of the glass tank furnace having a high melting rate,
**characterized in that**
the pure oxygen burners (3) are mounted in more than one of the following ways: mounted on a crown, horizontally mounted on breast walls, and obliquely mounted on the breast walls.

2. The glass tank furnace having a high melting rate according to claim 1, wherein a range of a depth of the tank furnace is 1 m to 1.2 m.

3. The glass tank furnace having a high melting rate according to claim 1, wherein a number of the pure oxygen burners (3) is 5 to 16.

4. The glass tank furnace having a high melting rate according to claim 1, wherein multiple rows of pure oxygen burners (3) are provided in the glass tank furnace having a high melting rate, and a number of the pure oxygen burners (3) in a middle row is less than a number of the pure oxygen burners (3) in a boundary row.

5. The glass tank furnace having a high melting rate according to claim 1, wherein the pure oxygen burners (3) are arranged in multiple rows and the pure oxygen burners (3) in adjacent rows are arranged alternately.

6. The glass tank furnace having a high melting rate according to claim 1, wherein the electrodes (7) are arranged on the bottom in 4 to 8 rows, and there are 4 to 6 electrodes (7) in each row.

7. The glass tank furnace having a high melting rate according to claim 1, wherein a weir (5) and bubbles (6) are provided on the bottom of the glass tank furnace having a high melting rate, a number of the weirs (5) is one or more, and the bubbles (6) are disposed before, behind or on the weir (5).

## Patentansprüche

1. Glaswannenofen mit einer hohen Schmelzrate, wobei das Verhältnis von Länge (L) zu Breite (W) des Glaswannenofens mit einer hohen Schmelzrate 2,3 bis 2,8 beträgt,
wobei Reinsauerstoffbrenner (3) in dem Glaswannenofen mit einer hohen Schmelzrate vorgesehen sind und Elektroden (7) auf dem Boden des Glaswannenofens mit einer hohen Schmelzrate vorgesehen sind,
**dadurch gekennzeichnet, dass**
die Reinsauerstoffbrenner (3) auf mehr als eine der folgenden Arten montiert sind: auf einer Krone montiert, horizontal auf Brustwänden montiert und schräg auf den Brustwänden montiert.

2. Glaswannenofen mit hoher Schmelzrate nach Anspruch 1, wobei ein Bereich einer Tiefe des Wannenofens 1 m bis 1,2 m beträgt.

3. Glaswannenofen mit hoher Schmelzrate nach Anspruch 1, wobei eine Anzahl der Reinsauerstoffbrenner (3) 5 bis 16 beträgt.

4. Glaswannenofen mit hoher Schmelzrate nach Anspruch 1, wobei mehrere Reihen von Reinsauerstoffbrennern (3) in dem Glaswannenofen mit einer hohen Schmelzrate vorgesehen sind, und eine Anzahl der Reinsauerstoffbrenner (3) in einer mittleren Reihe geringer ist als eine Anzahl der Reinsauerstoffbrenner (3) in einer Randreihe.

5. Glaswannenofen mit hoher Schmelzrate nach Anspruch 1, wobei die Reinsauerstoffbrenner (3) in mehreren Reihen angeordnet sind und die Reinsauerstoffbrenner (3) in benachbarten Reihen abwechselnd angeordnet sind.

6. Glaswannenofen mit hoher Schmelzrate nach Anspruch 1, wobei die Elektroden (7) auf dem Boden in 4 bis 8 Reihen angeordnet sind und sich in jeder Reihe 4 bis 6 Elektroden (7) befinden.

7. Glaswannenofen mit hoher Schmelzrate nach Anspruch 1, wobei ein Wehr (5) und Blasen (6) auf dem Boden des Glaswannenofens mit einer hohen Schmelzrate vorgesehen sind, eine Anzahl der Wehre (5) eins oder mehr ist und die Blasen (6) vor, hinter oder auf dem Wehr (5) angeordnet sind.

## Revendications

1. Four à bassin pour verre à haute vitesse de fusion, un rapport d'une longueur (L) sur une largeur (W) du four à bassin pour verre à haute vitesse de fusion étant de 2,3 à 2,8,
dans lequel des brûleurs à oxygène pur (3) sont prévus dans le four à bassin pour verre à haute vitesse de fusion, et des électrodes (7) sont prévues sur le fond du four à bassin pour verre à haute vitesse de fusion,
**caractérisé en ce que**
les brûleurs à oxygène pur (3) sont montés de plus d'une des manières suivantes : montés sur une couronne, montés horizontalement sur des parois intérieures, et montés en oblique sur les parois intérieures.

2. Four à bassin pour verre à haute vitesse de fusion selon la revendication 1, dans lequel une plage d'une profondeur du four à bassin est de 1 m à 1,2 m.

3. Four à bassin pour verre à haute vitesse de fusion selon la revendication 1, dans lequel un nombre de brûleurs à oxygène pur (3) est de 5 à 16.

4. Four à bassin pour verre à haute vitesse de fusion selon la revendication 1, dans lequel de multiples rangées de brûleurs à oxygène pur (3) sont prévues dans le four à bassin pour verre à haute vitesse de fusion, et un nombre de brûleurs à oxygène pur (3) dans une rangée médiane est inférieur à un nombre de brûleurs à oxygène pur (3) dans une rangée de bordure.

5. Four à bassin pour verre à haute vitesse de fusion selon la revendication 1, dans lequel les brûleurs à oxygène pur (3) sont agencés en de multiples rangées et les brûleurs à oxygène pur (3) dans des rangées adjacentes sont agencés en alternance.

6. Four à bassin pour verre à haute vitesse de fusion selon la revendication 1, dans lequel les électrodes (7) sont agencées sur le fond en 4 à 8 rangées, et il y a 4 à 6 électrodes (7) dans chaque rangée.

7. Four à bassin pour verre à haute vitesse de fusion selon la revendication 1, dans lequel un barrage (5) et des bulles (6) sont prévus sur le fond du four à bassin pour verre à haute vitesse de fusion, un nombre de barrages est un ou plus, et les bulles (6) sont disposées devant, derrière ou sur le barrage (5).
